# EUROPEAN PATENT APPLICATION

(11) **EP 2 302 878 A2**
(43) Date of publication of application: **30.03.2011**
(21) Application number: 10167241.8
(22) Date of filing: 24.06.2010
(51) Int. Cl.: H04M 1/18, H04M 1/02

(54) **Mobile terminal device and waterproof case structure**

(30) Priority: 28.09.2009 JP 2009222665
(71) Applicant: Sony Ericsson Mobile Communications Japan, Inc., Tokyo 108-0075 (JP)
(72) Inventor: Yabe, Osamu, Minato-Ku, Tokyo (JP); Kato, Kazuhiro, Minato-Ku Tokyo (JP); Yamada, Yuichi, Minato-Ku Tokyo (JP)
(74) Representative: Jackson, Jonathan Andrew

(57) **Abstract**

A mobile terminal device includes a first case having a first inner space housing a first substrate and an electric component, the first case having a first opening in a surface thereof facing the second case; a second case having a second inner space housing a second substrate and an electric component, the second case having a second opening in a surface thereof facing the first case; a slide member that slidably connects the first and second cases with one another; a flexible substrate that electrically connects the first and second substrates with one another through the first and second openings; and ring-like seal members surrounding the peripheries of the first and second openings. The first and second openings are closed with the flexible substrate with the seal members interposed therebetween.

## Description

The present invention relates to a mobile terminal device and a waterproof case structure of the mobile terminal device.

A structure, for example, a slide mobile-phone, may include upper and lower cases that are slidably coupled with one another, and a flexible substrate that extends between the cases to provide electric connection between the cases. To keep waterproof property of this structure, the sealed state of the inner spaces in the cases has to be considered.

Japanese Unexamined Patent Application Publication No. 2006-157465 suggests a mobile electronic device that provides smooth sliding operation, prevents water, dust, etc., from entering the device, and increases waterproof property and dustproof property. The mobile electronic device uses a waterproof rib that is formed at an edge of an opening of an upper case, and a waterproof rib that is formed at an edge of an opening of a lower case, so that the waterproof ribs prevent a foreign matter from entering the openings.

The pamphlet of International Publication No. 2006/095382 discloses a slide mobile-phone having a structure including upper and lower cases that have recesses in slide surfaces of the upper and lower cases, and a flexible substrate that is housed in the recesses. The recesses have slits in end surfaces of the recesses. The flexible substrate is inserted through the slits and the insertion portions of the flexible substrate are sealed (refer to Fig. 11 in the pamphlet).

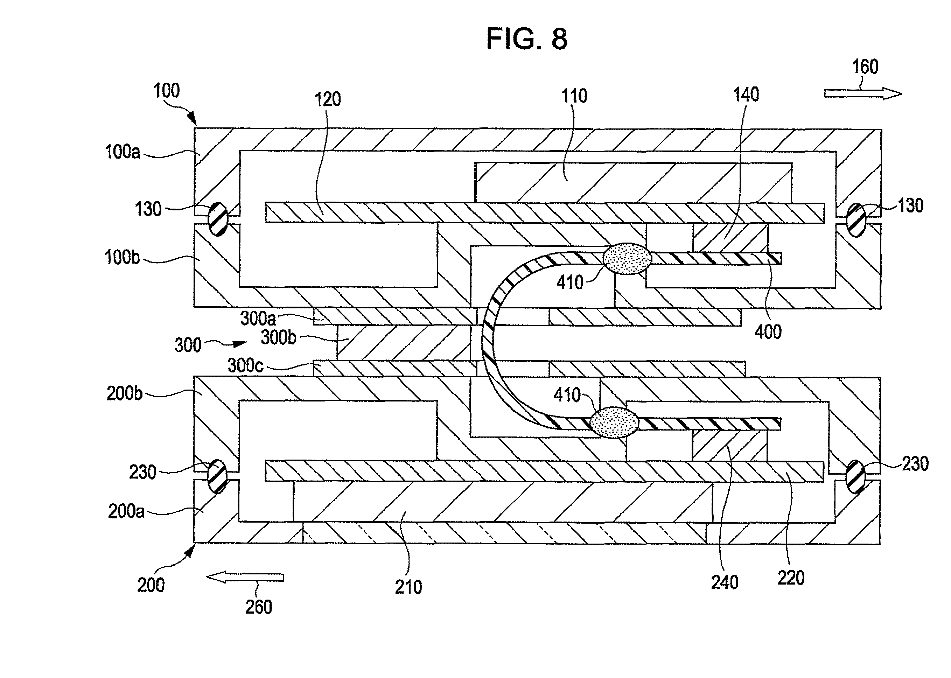

Fig. 8 illustrates a brief structure of such a slide mobile-phone. A lower case 100 houses a substrate 120 and a battery 110. An upper case 200 houses a substrate 220 and a liquid crystal display (LCD) 210. The lower case 100 and the upper case 200 are coupled with one another by a slide member 300 such that the lower case 100 and the upper case 200 can slide on one another in directions indicated by arrows 160 and 260. The lower case 100 includes case portions 100a and 100b. The lower case 100 defines an inner space by stacking the case portions 100a and 100b on one another with a ring-like packing (for example, o-ring) 130 interposed therebetween. Similarly, the upper case 200 includes case portions 200a and 200b. The upper case 200 defines an inner space by stacking the case portions 200a and 200b on one another with a ring-like packing 230 interposed therebetween.

The slide member 300 includes a plate member 300a that is fixed to the case portion 100b of the lower case 100, a plate member 300c that is fixed to the case portion 200b of the upper case 200, and a coupling portion 300b that couples the plate members 300a and 300c with one another. The plate member 300a is linearly slidable relative to the plate member 300c via the coupling portion 300b within a predetermined range.

A flexible substrate 400 provides electric connection between the lower case 100 and the upper case 200. One end of the flexible substrate 400 is connected with a connector 140 on the substrate 120 in the lower case 100, and the other end thereof is connected with a connector 240 on the substrate 220 in the upper case 200. The flexible substrate 400 extends from the connector 140, penetrates through a wall surface that is formed in the case portion 100b of the lower case 100 and that is perpendicular to a surface of the substrate 120, then extends through an opening that is formed in the slide member 300, penetrates through a wall surface that is formed in the case portion 200b of the upper case 200 and that is perpendicular to a surface of the substrate 220, and reaches the connector 240. Gaps at penetration portions in the respective perpendicular wall surfaces are filled with packings 410.

An operation unit that receives operation of a user is not particularly illustrated. In many cases, a main operation unit is provided in the lower case, and a sub operation unit is provided in the upper case.

The structure described in Japanese Unexamined Patent Application Publication No. 2006-157465 has to keep waterproof property highly reliably in a movable portion when the upper and lower cases slide. Regarding variation in precision of individual components upon mass production, it is difficult to provide high reliability.

In the structure of related art shown in Fig. 8, the packing may have a thickness of at least 1 mm, and each case may have a thickness of about 1 mm at each of positions located above and below the packing. Hence, the upper and lower cases may have a thickness of about 6 mm in total. The thickness of about 6 mm may be a serious obstruction to decrease in thickness of a mobile-phone although the arrangement of components is improved. The obstruction may affect the design of the mobile-phone.

Also, in a case where a rubber packing is formed by insert molding at an intermediate position of a flexible substrate, the insert molding is hardly performed while the flexible substrate is folded. It is difficult to use a flexible substrate of a folded type with a large number of pins that is included in, for example, a slide mobile-phone typically available in Japan.

Accordingly, it is desirable to provide a mobile terminal device including upper and lower cases and being capable of providing highly reliable waterproof property while maximally suppressing increase in thickness of the terminal.

According to an embodiment of the present invention, a mobile terminal device includes a first case having a first inner space in which a first substrate and an electric component are housed, the first case having a first opening in a surface of the first case facing the second case; a second case having a second inner space in which a second substrate and an electric component are housed, the second case having a second opening in a surface of the second case facing the first case; a slide member that connects the first and second cases with one another such that the second case can slide on the first case; a flexible substrate that electrically connects the first substrate in the first case and the second substrate in the second case with one another through the first and second openings; and ring-like seal members provided to surround the peripheries of the first and second openings. The first and second openings are closed with the flexible substrate with the seal members interposed therebetween.

The first and second openings are formed in the mutually facing surfaces of the first and second cases, and the flexible substrate is electrically connected with the substrates in the cases through the openings. Also, the openings are closed with the flexible substrate with the ring-like seal members, which are provided to surround the peripheries of the openings, interposed therebetween. The openings can be sealed while the increase in thickness of the terminal is maximally suppressed.

In particular, the slide member may include a first plate member fixed to the first case, and a second plate member fixed to the second case. The flexible substrate and the seal members may be pressed and pinched between the first and second plate members and the mutually facing surfaces of the first and second cases. By using the slide member which is an existing member, the openings can be more reliably sealed while the thickness of the terminal can be more reliably prevented from increasing.

According to another embodiment of the present invention, a waterproof case structure includes a ring-like seal member provided to surround the periphery of an opening that is formed in a surface of a case, the opening being closed with a flexible substrate with the seal member interposed therebetween; and a plate member that presses and fixes the flexible substrate to the surface of the case.

Other configurations and other advantages will be described later.

With these embodiments, the mobile terminal device that has the highly reliable waterproof property while maximally suppressing the increase in thickness of the terminal can be provided.

Preferably, the mobile phone terminal includes upper and lower cases that are slidably coupled with one another.

Various respective aspects and features of the invention are defined in the appended claims. Combinations of features from the dependent claims may be combined with features of the independent claims as appropriate and not merely as explicitly set out in the claims.

Embodiments of the invention will now be described with reference to the accompanying drawings, throughout which like parts are referred to by like references, and in which:
Figs. 1A and 1B each illustrate an external configuration of a slide mobile-phone terminal according to an embodiment of the present invention;
Fig. 2 briefly illustrates a first configuration example of the mobile-phone terminal in Figs. 1A and 1B;
Fig. 3 is an exploded perspective view showing a specific configuration for sealing an opening in a case portion in Fig. 2 while part of the configuration is not illustrated;
Fig. 4 briefly illustrates a second configuration example of the mobile-phone terminal in Figs. 1A and 1B;
Fig. 5 is an exploded perspective view showing a slide member of the configuration example in Fig. 4;
Fig. 6 briefly illustrates a third configuration example of the mobile-phone terminal in Figs. 1A and 1B;
Fig. 7 illustrates an external configuration of a flexible substrate in Fig. 6; and
Fig. 8 illustrates a brief configuration of a slide mobile-phone of related art.

Preferred embodiments of the present invention will be described below in detail with reference to the attached drawings.

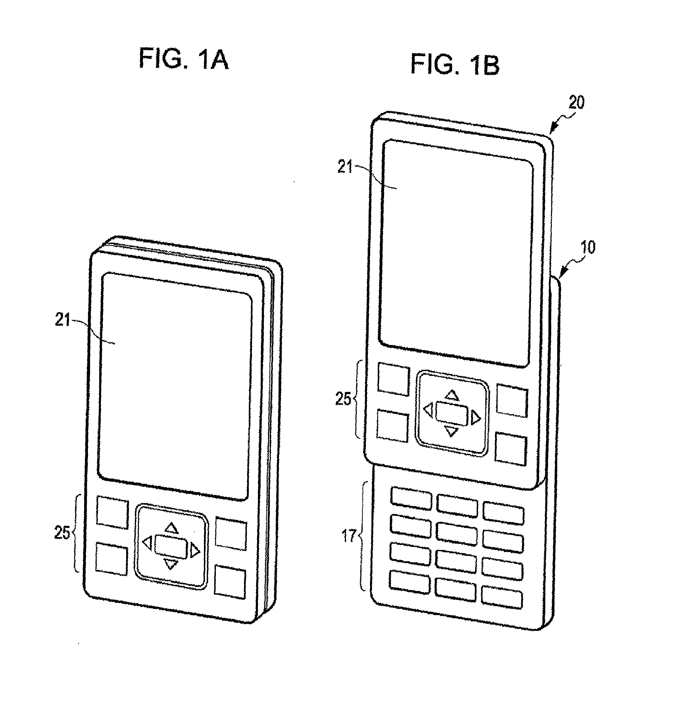

Figs. 1A and 1B each illustrate an external configuration of a slide mobile-phone terminal device according to an embodiment of the present invention. In the specification, the terminal device may be merely referred to as terminal.

Fig. 1A illustrates a closed state of upper and lower cases. Fig. 1B illustrates an open state of the upper and lower cases. The mobile-phone terminal includes a lower case 10 (first case) and an upper case 20 (second case). The upper case 20 is coupled with the lower case 10 such that the upper case 20 can linearly slide on the lower case 10. The upper case 20 includes a LCD 21 serving as a display unit (display device), and a sub operation unit 25. The lower case 10 includes a main operation unit 17 including numeric keypads and arranged at a position at which the main operation unit 17 is hidden by the upper case 20 in the closed state and exposed in the open state. Though not shown, a speaker and a microphone are arranged at predetermined positions in the upper and lower cases.

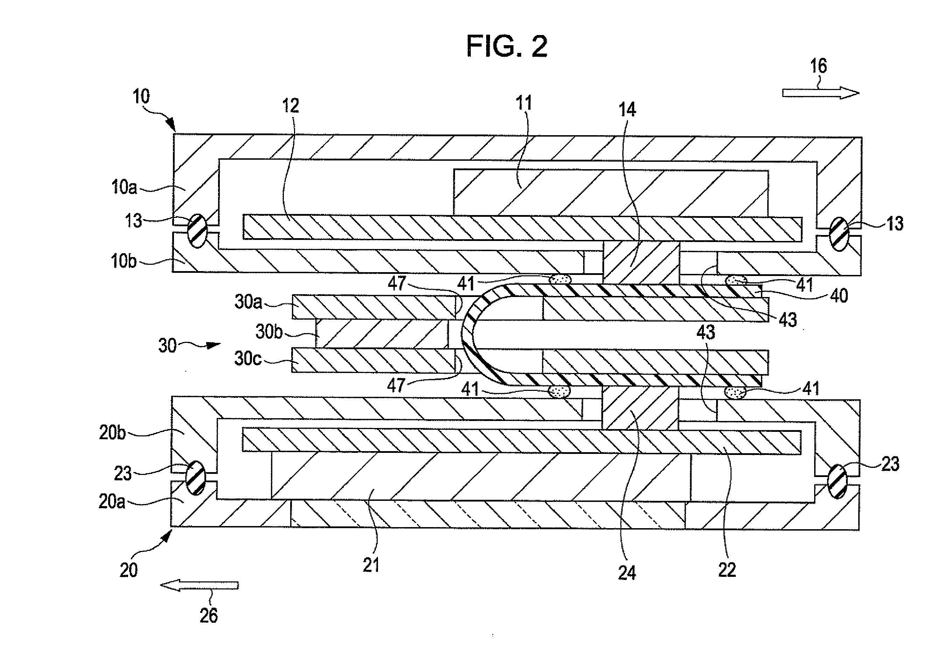

Fig. 2 briefly illustrates a first configuration example of the mobile-phone terminal in Figs. 1A and 1B. This drawing is a cross-sectional view taken along a plane perpendicular to a display screen to extend in a longitudinal direction of the upper and lower cases in the closed state. To clearly show the details, Fig. 2 does not correspond to the actual scale of the terminal.

The lower case 10 has a first inner space in which a substrate 12 with an electric component mounted thereon, and a battery 11 are housed. The upper case 20 has a second inner space in which a substrate 22 with another electric component mounted thereon, and the LCD 21 are housed. The lower and upper cases 10 and 20 are coupled with one another by a slide member (slide unit) 30 such that the lower and upper cases 10 and 20 can be linearly slidable on one another (in directions indicated by arrows 16 and 26). The lower case 10 includes case portions 10a and 10b. The lower case 10 defines the inner space by stacking the case portions 10a and 10b on one another with a ring-like packing (for example, o-ring) 13 interposed therebetween. Similarly, the upper case 20 includes case portions 20a and 20b. The upper case 20 defines the inner space by stacking the case portions 20a and 20b on one another with a ring-like packing 23 interposed therebetween.

The slide member 30 includes a plate member 30a (first plate member) that is fixed to the case portion 10b of the lower case 10, a plate member 30c (second plate member) that is fixed to the case portion 20b of the upper case 20, and a coupling portion 30b that couples the plate members 30a and 30c with one another. The plate members 30a and 30c respectively have openings 47. The plate member 30a is linearly slidable relative to the plate member 30c via the coupling portion 30b within a predetermined range. Since the structure of the slide member 30 is an existing structure, the detailed description of the structure will be omitted.

A flexible substrate 40 is formed of a flexible member including a conductor arranged therein and provides electric connection between the lower case 10 and the upper case 20. One end of the flexible substrate 40 is connected with a connector 14 on the substrate 12 in the lower case 10, and the other end thereof is connected with a connector 24 on the substrate 22 in the upper case 20.

The lower and upper cases 10 and 20 have first and second openings 43 that are formed in mutually facing surfaces of the lower and upper cases 10 and 20 and communicate with the inner spaces. The flexible substrate 40 is electrically connected with the first and second substrates 12 and 22 through the first and second openings 43. Also, ring-like gaskets 41 (thin-plate-like packings serving as seal members) are respectively provided to surround the peripheries of the first and second openings 43. The first and second openings 43 are closed with the flexible substrate 40 with the gaskets 41 interposed therebetween. By desirable fixing means, the flexible substrate 40 and the gaskets 41 are pressed and pinched respectively between the first and second plate members 30a and 30c, and the mutually facing surfaces of the lower and upper cases 10 and 20. The fixing means may be, for example, a screw, a bolt and a nut, or a structure using a spring force.

An operation unit that receives operation of a user is not particularly illustrated. In many cases, a main operation unit is provided in the lower case 10, and a sub operation unit is provided in the upper case 20.

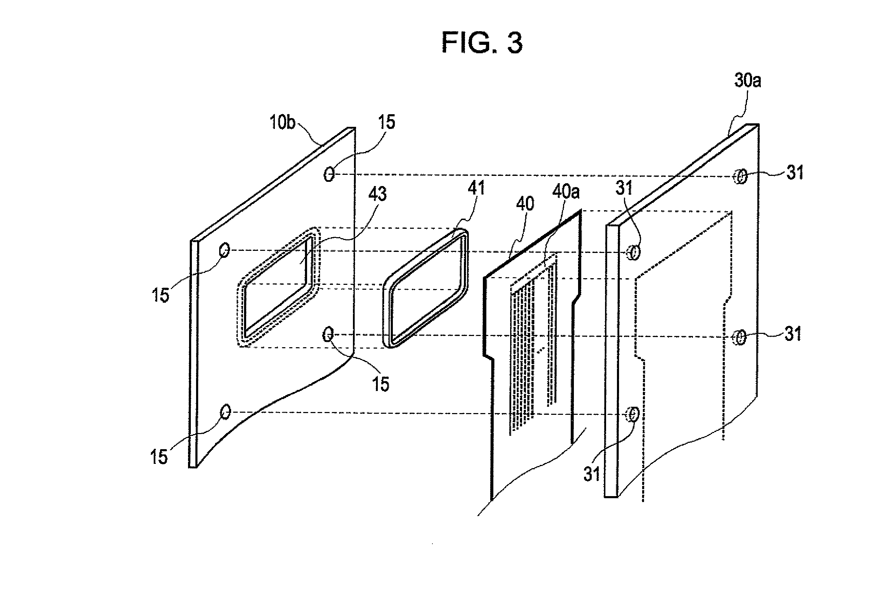

Fig. 3 is an exploded perspective view showing a specific configuration for sealing the opening 43 in the case portion 10b in Fig. 2 while part of the configuration is not illustrated. This drawing shows a primary portion of a waterproof case structure. The opening 43 formed in a plate surface of the case portion 10b is used to allow a terminal portion 40a of the flexible substrate 40 to be connected with the connector 14 in the case. The gasket 41 and the flexible substrate 40 are pressed and fixed to the case portion 10b by the plate member 30a of the slide member 30 such that the opening 43 is closed with a surface of the flexible substrate 40 with the ring-like gasket 41, which is arranged to surround the periphery of the opening 43, interposed between the flexible substrate 40 and the plate member 30a. In this example, pressing and fixing are performed by inserting screws through screw holes 31 formed in the plate member 30a and screwing the screws into corresponding thread grooves 15 formed in the case portion 10b. The fixing method is not limited to screwing. Means for coupling the slide member 30 with the lower and upper cases 10 and 20 may use a configuration that is originally provided.

By using the slide member 30, the flexible substrate 40 that provides electric connection between the lower and upper cases 10 and 20 closes the openings 43 of the lower and upper cases 10 and 20 with the gaskets 41 interposed therebetween. Hence, the openings can be sealed in a watertight manner.

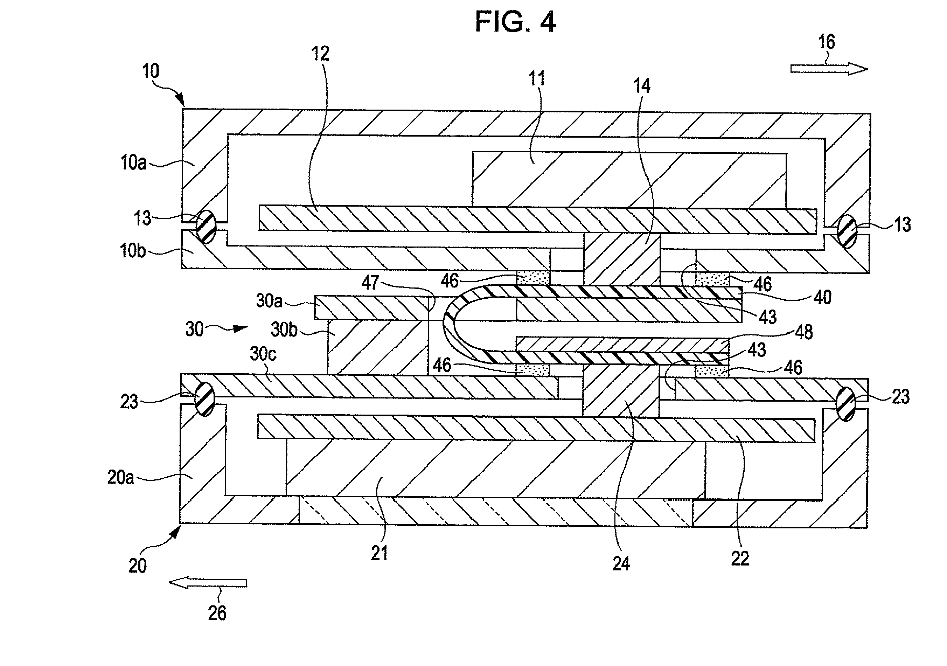

Fig. 4 briefly illustrates a second configuration example of the mobile-phone terminal in Figs. 1A and 1B. This drawing is a cross-sectional view similar to Fig. 2. Components similar to those in Fig. 2 will refer like reference numerals and redundant description will be omitted.

In the second configuration example, a slide member 30 includes a first plate member 30a that is fixed to a lower case 10, and a second plate member 30c that is fixed to an upper case 20. The second plate member 30c also serves as a case surface of the upper case 20. The plate member 30a has an opening 47. A flexible substrate 40 is electrically connected with a connector 14 of a substrate 12 through the opening 47. The plate member 30c has an opening 43. The flexible substrate 40 is electrically connected with a connector 24 of a substrate 22 through the opening 43. Also, in this configuration example, a waterproof adhesive sheet 46 is used as a seal member. A third plate member 48 faces the opening 43 of the plate member 30c. The third plate member 48 presses and fixes an end portion of the flexible substrate 40 to the plate member 30c with the waterproof adhesive sheet 46 interposed therebetween. Although this fixing means is not particularly limited, for example, screwing as described above may be used.

In this example, the plate member of the slide member also serves as the case surface of the upper case. Alternatively, the plate member of the slide member may serve as a case surface of the lower case, Still alternatively, the plate members of the slide member may serve as case surfaces of both the upper and lower cases. In any of the configuration examples, the seal member may be a gasket or a waterproof adhesive sheet.

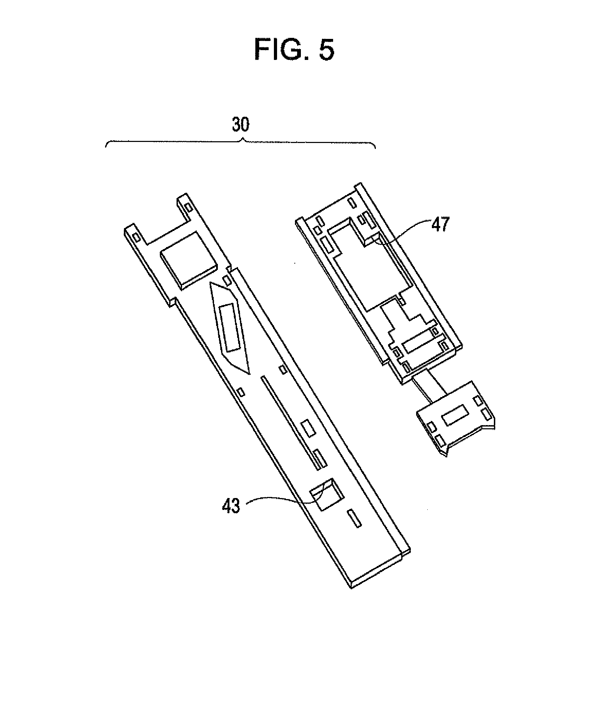

Fig. 5 is an exploded perspective view showing the slide member 30 of the configuration example in Fig. 4. The illustration of the third plate member 48 is omitted.

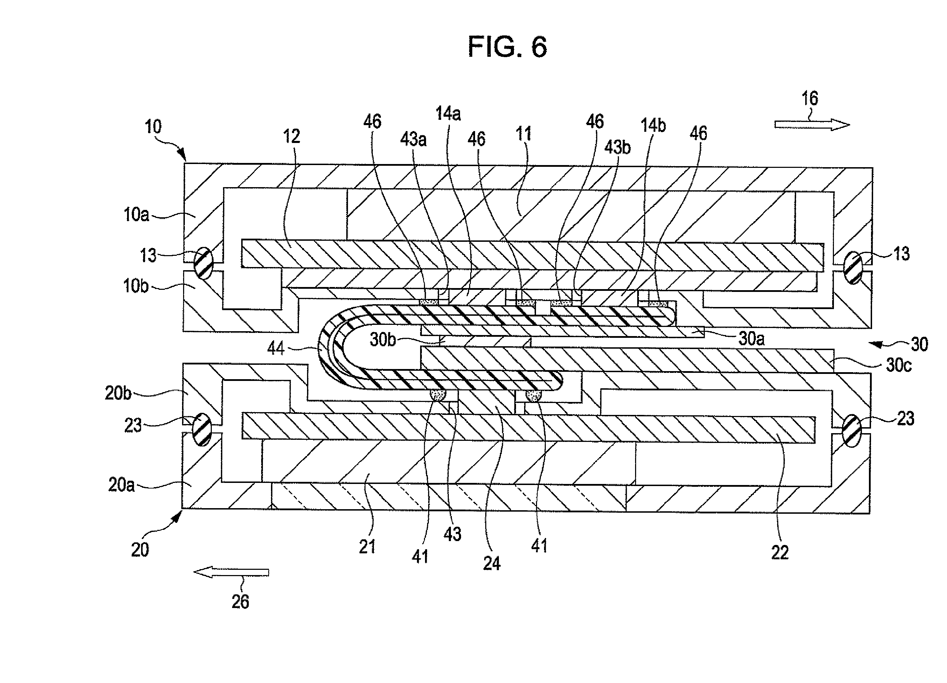

Fig. 6 briefly illustrates a third configuration example of the mobile-phone terminal in Figs. 1A and 1B. Components similar to those in Figs. 2 and 4 will refer like reference numerals and redundant description will be omitted.

In this configuration, two openings 43a and 43b are provided in a lower case 10. A flexible substrate 44 has a contact portion at one end thereof that is exposed through the opening 43a, and a contact portion at the other end thereof that is exposed through the opening 43b. The flexible substrate 44 is folded into two sections, and has a contact portion provided substantially at a center portion thereof that is exposed through an opening 43 in an upper case 20. In this example, waterproof adhesive sheets 46 are used for the openings 43a and 43b in the lower case 10, whereas a gasket 41 is used for the opening 43 in the upper case 20. As described above, the seal member may be any of the gasket 41 and the waterproof adhesive sheet 46, and may be even other members.

The flexible substrate 44 extends between the lower and upper cases 10 and 20 in a path around the slide member 30. In this configuration example, or in any of the above-described configuration examples, the flexible substrate 44 may extend through the opening in the slide member or extend in a path around the slide member when the flexible substrate 44 extends between the lower case 10 and the upper case 20.

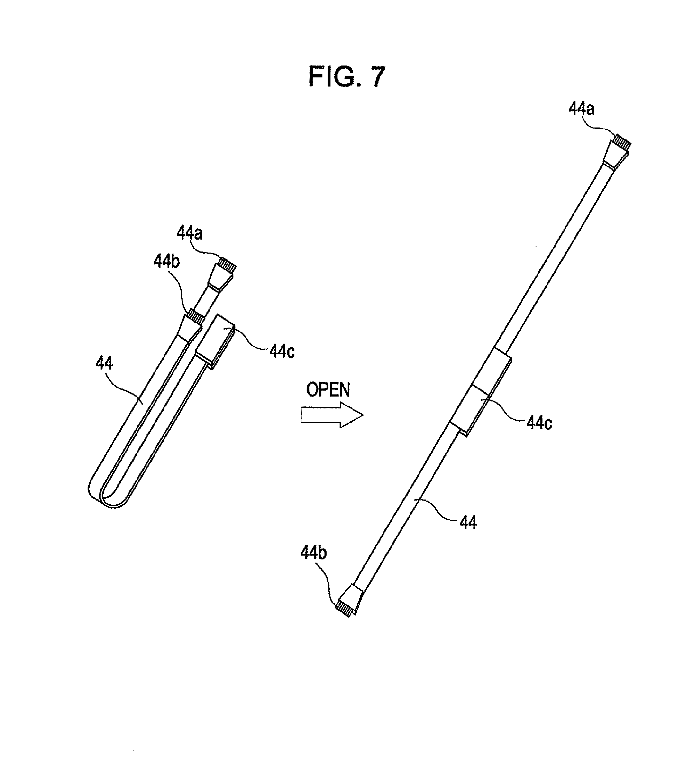

Fig. 7 illustrates an external configuration of the flexible substrate 44 in Fig. 6. The flexible substrate 44 has a contact portion at one end 44a thereof, and a contact portion at the other end 44b thereof. The contact portions at the one end 44a and the other end 44b are electrically connected with connectors. Also, the flexible substrate 44 has a contact portion at a center portion 44c thereof. The contact portion at the center portion 44c is electrically conductive with the contact portions at the one end 44a and the other end 44b.

In this embodiment, the waterproof structure relating to the flexible substrate basically has the following configuration.
(1) The openings are formed in the mutually facing case surfaces of the upper and lower cases. The connectors are exposed through the openings and used for electric connection between the connectors and the flexible substrate.
(2) The ring-like seal members are provided to surround the peripheries of the openings, and the openings are sealed with the flexible substrate with the seal members interposed therebetween.
(3) The plate members of the slide member and the case surfaces around the openings press and pinch the flexible substrate together with the seal members.

With this configuration, a proper holding pressure that provides adhesiveness of the seal members can be kept, the seal members can be prevented from peeled or dropped, and the connectors can be prevented from being detached.

Also, with this structure, a waterproof portion is not a movable portion. Thus, the structure has high reliable waterproof property as compared with a movable structure. Also, the waterproof structure is accommodated within an approximate height of the connectors. A dimensional loss in a thickness direction when the waterproof structure is provided is almost negligible. Further, the slide unit also serves as a connector detachment prevention structure and a gasket pressure structure. The reliability is further increased with the structure is still simple. Accordingly, with this structure, a slide mobile terminal can have highly reliable waterproof structure while providing a thin structure.

While the preferred embodiments have been described above, various modifications and changes may be included in the present invention, in addition to the aforementioned configurations. For example, the description only has focused on the mobile-phone terminal, however, the present invention may be applied to any mobile device including upper and lower cases.

The present application contains subject matter related to that disclosed in Japanese Priority Patent Application JP 2009-222665 filed in the Japan Patent Office on September 28, 2009.

It should be understood by those skilled in the art that various modifications, combinations, sub-combinations and alterations may occur depending on design requirements and other factors insofar as they are within the scope of the appended claims.

## Claims

1. A mobile terminal device comprising:
a first case having a first inner space in which a first substrate and an electric component are housed, the first case having a first opening in a surface of the first case facing the second case;
a second case having a second inner space in which a second substrate and an electric component are housed, the second case having a second opening in a surface of the second case facing the first case;
a slide member that connects the first and second cases with one another such that the second case can slide on the first case;
a flexible substrate that electrically connects the first substrate in the first case and the second substrate in the second case with one another through the first and second openings; and
ring-like seal members provided to surround the peripheries of the first and second openings,
wherein the first and second openings are closed with the flexible substrate with the seal members interposed therebetween.

2. The mobile terminal device according to claim 1,
wherein the slide member includes
a first plate member fixed to the first case, and
a second plate member fixed to the second case,
wherein the flexible substrate and the seal members are pressed and pinched between the first and second plate members and the mutually facing surfaces of the first and second cases.

3. The mobile terminal device according to claim 1,
wherein the slide member includes
a first plate member fixed to the first case,
a second plate member fixed to the second case, and
a third plate member, at least one of the first and second plate members also serving as a case surface of the first or second case, the one of the first and second plate members having the opening, the third plate member pressing the seal member and the flexible substrate against the opening.

4. The mobile terminal device according to claim 1, wherein at least one of the first and second cases has a plurality of openings, the flexible substrate being electrically connected with the corresponding substrate in the one of the first and second cases through the plurality of openings at different positions of the flexible substrate.

5. The mobile terminal device according to claim 4, wherein one end and the other end of the flexible substrate are electrically connected with one of the first and second substrates through the plurality of openings, and a center portion of the flexible substrate is electrically connected with the other of the first and second substrates.

6. The mobile terminal device according to claim 1 to 5, wherein the flexible substrate that electrically connects the first and second substrates with one another extends through an opening that is formed in the slide member or extends in a path around the slide member.

7. A waterproof case structure comprising:
a ring-like seal member provided to surround the periphery of an opening that is formed in a surface of a case, the opening being closed with a flexible substrate with the seal member interposed therebetween; and
a plate member that presses and fixes the flexible substrate to the surface of the case.
